# FASCICULE DE BREVET EUROPEEN

(11) **EP 0 437 993 B1**
(45) Date de publication et mention de la délivrance du brevet: **24.05.1995**
(21) Numéro de dépôt: 90403534.2
(22) Date de dépôt: 11.12.1990
(51) Int. Cl.: G05B 19/10

(54) **Dispositif de commande de fonctions à bord d'un véhicule automobile**
Steuerungsvorrichtung von Funktionen an Bord eines Kraftfahrzeugs
Control equipment for functions aboard a vehicle

(30) Priorité: 11.01.1990 FR 9000285
(43) Date de publication de la demande: 24.07.1991
(73) Titulaire: AUTOMOBILES PEUGEOT, 75116 Paris (FR); AUTOMOBILES CITROEN, 92200 Neuilly-sur-Seine (FR)
(72) Inventeur: Gaches, Philippe, F-92599 Rueil Malmaison (FR)
(74) Mandataire: Habasque, Etienne Joel Jean-François

(56) Documents cités:
- EP-A- 0 057 970
- EP-A- 0 342 160
- DE-U- 8 130 371
- FR-A- 2 448 177
- GB-A- 2 212 946
- US-A- 4 035 795

## Description

La présente invention concerne un dispositif de commande de fonctions à bord d'un véhicule automobile.

Les dispositifs de commande de ce type, connus dans l'état de la technique, comportent par exemple un organe de commande associé à une fonction déterminée, illustrée par exemple par un pictogramme sur le tableau de bord du véhicule automobile.

On conçoit que plus le nombre de fonctions augmente, plus le nombre d'organes de commande et de pictogrammes associés augmentent, ce qui débouche sur des tableaux de bord de véhicule de plus en plus complexes.

Cette complexité présente un certain nombre d'inconvénients dans la mesure où on arrive rapidement à saturation du tableau de bord du véhicule.

Par ailleurs, cette complexité nuit à la sécurité de conduite du véhicule dans la mesure où le conducteur est obligé de porter son attention pendant un temps plus ou moins long, sur le tableau de bord du véhicule, afin de trouver l'organe de commande correspondant à la fonction sur laquelle il souhaite agir.

L'invention a donc pour but de résoudre ces problèmes en proposant un dispositif de commande qui soit le plus simple possible, fiable, d'un encombrement réduit et dont le maniement soit le plus simple et le plus rapide possible pour ne pas perturber la conduite du véhicule.

A cet effet, l'invention a pour objet un dispositif de commande de fonctions à bord d'un véhicule automobile, caractérisé en ce qu'il comporte des moyens (2) de stockage de pages écrans présentant des zones portant des informations relatives à des fonctions déterminées du véhicule, des moyens (6,7) de sélection d'une page écran, des moyens (4) d'affichage de ladite page écran sélectionnée, dont des zones (8,9, 10,11) correspondant aux zones de la page écran, sont associées chacune à des moyens (12,13,14,15) de réglage d'au moins une caractéristique des fonctions correspondant aux informations affichées dans ces zones, et en ce que les moyens de réglage associés à chaque zone comprennent un seul organe de réglage rotatif dont le raccordement à des circuits (16,17) de commande des fonctions est assuré par des moyens (1) de connexion en fonction des informations affichées dans cette zone, disposé en regard de celle-ci, et muni d'un disque (18) dont des secteurs (19) sont polarisés magnétiquement et déplaçables par l'utilisateur devant des capteurs à effet Hall (20,21) dont les sorties sont reliées à des moyens de traitement (23) pour déterminer le sens de rotation du disque afin de commander les fonctions en conséquence, un aimant (22) de polarité opposée à celle des secteurs du disque (18) étant disposé en regard de celui-ci de manière à donner à l'utilisateur une sensation de franchissement de crans lors de la rotation du disque.

L'invention sera mieux comprise à l'aide de la description qui va suivre, donnée uniquement à titre, d'exemple et faite en se référant aux dessins annexés, sur lesquels :
- la Fig.1 représente un schéma synoptique d'un mode de réalisation d'un dispositif de commande selon l'invention; et
- les Fig.2,3,4 et 5 illustrent le fonctionnement d'un mode de réalisation de moyens de réglage entrant dans la constitution d'un dispositif de commande selon l'invention.

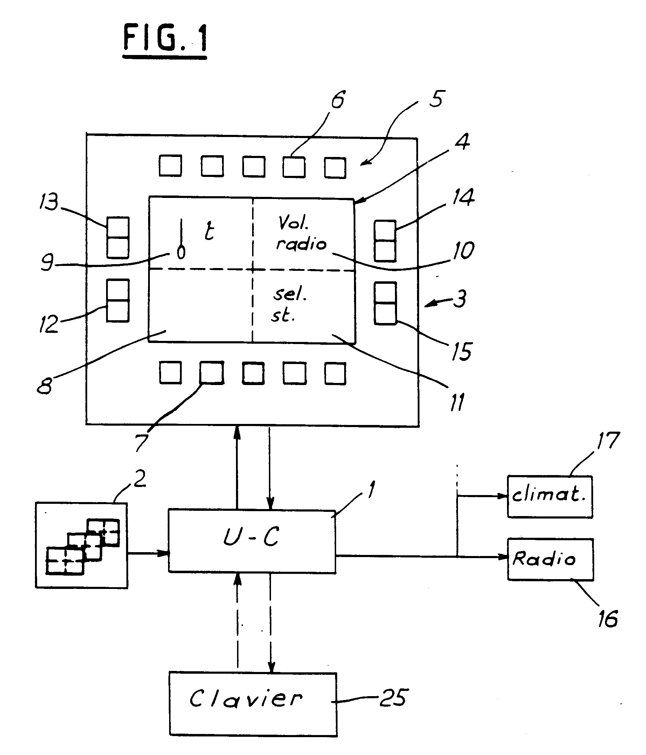

Ainsi qu'on peut le voir sur la Fig.1, un dispositif de commande de fonctions à bord d'un véhicule automobile, comporte une unité centrale 1 de traitement d'informations reliée à des moyens de stockage 2 de pages écrans qui, comme cela sera décrit plus en détail par la suite, présentent des zones portant des informations relatives à des fonctions déterminées du véhicule.

Cette unité centrale 1 est également reliée à une platine de communication 3 formant interface entre le véhicule et l'utilisateur. Cette platine comporte des moyens d'affichage 4 d'informations comme par exemple une page écran sélectionnée dans les moyens de stockage 2 et des organes de commande 5 disposés autour de cet écran.

Ces organes de commande comportent par exemple deux séries 6 et 7 de moyens de sélection d'une page écran dans les moyens de stockage 2. Ces moyens de sélection sont disposés par exemple au-dessus et au-dessous des moyens d'affichage et permettent à l'unité centrale 1, sous la commande de l'utilisateur, de sélectionner l'une ou l'autre des pages écrans stockées dans les moyens de stockage 2, en vue de son affichage sur les moyens d'affichage 4.

Comme cela est illustré sur cette figure 1, les pages écrans présentent par exemple quatre zones correspondant à quatre zones respectivement 8, 9, 10 et 11 des moyens d'affichage. Ces zones ces moyens d'affichage sont associées chacune à des moyens de réglage d'au moins une caractéristique des fonctions correspondant aux informations affichées dans ces zones.

Ces moyens de réglage sont désignés respectivement par les références 12, 13, 14 et 15.

On conçoit donc que le dispositif selon l'invention comporte des moyens d'affichage 4 d'une page écran sélectionnée par l'utilisateur grâce aux moyens de sélection 6 et 7, dans les moyens de stockage, des zones de ces moyens d'affichage correspondant à des zones de la page écran, étant associées à des moyens de réglage des fonctions correspondant aux informations affichées dans ces zones.

Ainsi par exemple, la zone 9 des moyens d'affichage 4 comporte un pictogramme illustrant un thermomètre indiquant à l'utilisateur que l'organe de réglage 13 associé à cette zone permet d'agir sur le système de climatisation du véhicule pour augmenter ou abaisser la température dans le véhicule.

Ces organes de réglage sont par exemple disposés à gauche et à droite des moyens d'affichage en regard d'une zone particulière de ceux-ci, de manière que l'utilisateur puisse associer un organe de réglage et une zone et plus particulièrement l'information figurant dans celle-ci.

Les zones 10 et 11 portent quant à elles des informations écrites concernant respectivement par exemple le volume du son de la radio de bord du véhicule et la sélection des stations de celui-ci.

Les organes de réglage 14 et 15 permettent alors respectivement d'augmenter ou d'abaisser le volume de reproduction des sons et de balayer les stations reçues par celui-ci.

En fonction de ces différents ordres de commande, l'unité centrale 1 agit sur le poste de radio 16 de bord du véhicule ou sur le système de climatisation 17 de celui-ci.

On conçoit que dans le cas où l'utilisateur sélectionne une autre page écran dans les moyens de stockage 2, les fonctions qui sont affectées aux zones des moyens d'affichage et aux organes de réglage correspondants, sont différentes et que ces organes sont raccordés pour agir sur des circuits de commande de fonctions différentes du véhicule.

Ainsi, les moyens de réglage associés à chaque zone des moyens d'affichage ne comprennent qu'un seul organe de réglage dont le raccordement à des circuits de commande des fonctions du véhicule est assuré par des moyens de connexion et plus particulièrement par l'unité centrale 1 comme cela est décrit sur cette Fig.1, selon la fonction que l'on souhaite commander et illustrer par des informations affichées dans cette zone.

On utilise donc des moyens d'affichage implantés dans le véhicule pour présenter au conducteur du véhicule différentes informations.

Bien entendu, il paraît impossible d'introduire dans un véhicule autant de moyens d'affichage qu'il n'y a de fonctions à commander.

Les moyens d'affichage peuvent donc être constitués par un écran multi-fonctions et leur implantation de même que celle des circuits associés, dans le poste de conduite du véhicule, permettent d'envisager de multiples applications.

En effet, il est tout à fait envisageable de commander des fonctions traditionnelles, par exemple le poste de radio du véhicule, la climatisation ou l'ordinateur de bord de celui-ci, mais aussi d'introduire des fonctions de service telles qu'un manuel d'utilisation du véhicule ou une aide à la maintenance.

L'introduction de cet écran dans le poste de conduite du véhicule pose un problème d'ergonomie, qu'il est important de résoudre d'une manière efficace pour ne pas trop distraire le conducteur de sa tâche de conduite.

Il est possible de prévoir un seul écran d'affichage en couleur, placé au centre de la planche de bord ou dans la console du véhicule, c'est à dire en avant de la poignée de commande du frein à main, et d'installer un système de pointage du type "souris" utilisé en informatique, pour la sélection des pages écrans dans les moyens de stockage 2.

Cependant, il s'avère à l'usage que ce dispositif peut amener le conducteur à trop fixer son attention sur l'écran du véhicule pour surveiller l'exécution de ses ordres, en étant distrait de la conduite du véhicule.

Les ordres que le conducteur ou un utilisateur donne, sont en général du type "plus ou moins " "avant-arrière" ou "marche-arrêt". Ainsi, par exemple, on peut citer le réglage de la température de l'habitacle ou le réglage de volume du son du poste de radio.

Ceci est également vrai pour des fonctions plus complexes, telles que l'aide à la navigation, dans laquelle le conducteur est amené à faire un choix de destination et de point de départ, dans une liste qu'il fait défiler dans un sens ou dans l'autre.

Les moyens de réglage disposés de part et d'autre des moyens d'affichage peuvent être constitués par des basculeurs à contact fugitif, comportant deux parties correspondant l'une à une incrémentation et l'autre à une décrémentation de la fonction, ces parties étant actionnées selon les besoins par l'utilisateur.

Ces basculeurs, en temps que moyens de réglage, sont associés par exemple à une représentation graphique symbolique, sur l'écran, de la fonction sur laquelle ils agissent. Ceci permet donc de ne pas dédicacer les basculeurs à une fonction unique de réglage, comme cela est actuellement le cas dans les véhicules automobiles. A titre d'exemple, on peut citer les basculeurs de montée ou de descente des vitres du véhicule.

Dans le dispositif selon l'invention, les moyens de réglage associés à chaque zone des moyens d'affichage comprennent un seul organe de réglage, qui est donc multi-fonctions et dont l'utilisation dépend de la fonction choisie par l'utilisateur et affectée à cet organe. Le traitement électronique des signaux de sortie de ces basculeurs ne présente pas de problème particulier et ne sera pas décrit plus en détail, dans la mesure où il s'apparente tout à fait au traitement classique des informations de sortie par exemple d'un clavier d'entrée d'informations.

L'unité centrale permet de réaliser ce traitement et d'agir en conséquence sur les circuits correspondants du véhicule.

Ces moyens de réglage peuvent également être constitués par des organes de réglage dont la commande est assurée par la rotation d'une molette par l'utilisateur. La rotation de ces molettes peut être discrétisée par un dispositif mécanique ou autre, permettant à l'utilisateur d'avoir une sensation de franchissement de crans qu'il est difficile de rendre à l'aide d'un basculeur.

Cependant, le traitement de la rotation de ces molettes est plus complexe que celui des signaux de sortie des basculeurs.

En effet, il est nécessaire de connaître non seulement quelle molette a été actionnée mais également son sens de rotation pour pouvoir déduire l'ordre donné par l'utilisateur.

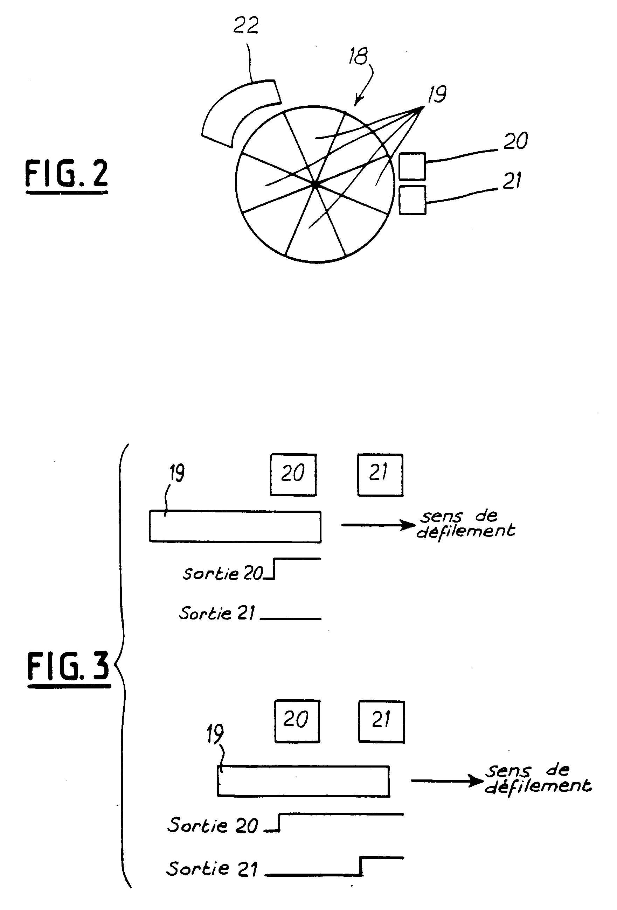

A titre d'exemple, on peut envisager d'utiliser dans ce type d'organes, des capteurs à effet Hall et des aimants comme cela est représenté sur la Fig.2, la fonction classique de ces capteurs étant de détecter un champ magnétique.

Cette solution n'est bien entendu pas la seule envisageable et une solution mécanique avec des interrupteurs classiques convient également. Cependant, la fiabilité et les sensations tactiles peuvent être améliorées en utilisant une telle conception.

Ainsi qu'on l'a mentionné précédemment, ces moyens de réglage comprennent une molette se présentant sous la forme d'un disque 18 moulé en plastoferrite, qui est polarisé par exemple Nord dans quatre secteurs indiqués par la référence 19 sur cette figure, ces secteurs étant régulièrement répartis sur le disque.

Deux détecteurs à effet Hall 20 et 21 et un aimant 22 polarisé SUD, sont placés en regard de ce disque. L'angle des secteurs polarisés du disque est tel que ces derniers recouvrent les deux capteurs 20 et 21 à un instant donné de la rotation de celui-ci.

Le passage d'un des secteurs devant l'un des capteurs 20, 21 permet de connaître le moment où l'utilisateur demande une action.

Cependant, il faut également déterminer le sens de rotation de ce disque. Une fois ce sens de rotation déterminé, il est possible de savoir si l'utilisateur veut incrémenter ou décrémenter une caractéristique de réglage de la fonction sur laquelle il agit. Ceci est possible grâce à l'implantation du deuxième capteur à effet Hall.

En effet, la rotation des secteurs polarisés du disque est détectée par les deux capteurs et dans la mesure où l'angle des secteurs est suffisant pour que ceux-ci recouvrent les deux capteurs, et en prenant par exemple une rotation dans le sens horaire du disque, c'est le capteur 20 qui voit le premier un secteur 19 et reste activé jusqu'au passage de ce même secteur devant le capteur 21.

La Fig.3 représente le diagramme des temps qui explicite l'exemple de fonctionnement décrit précédemment.

Si l'on revient à la Fig.2, il est à noter que l'aimant polarisé SUD 22 disposé à proximité de ce disque, permet d'obtenir une sensation tactile de franchissement de crans.

De plus, en attirant un des secteurs polarisés NORD du disque, ce disque est placé de manière que ces secteurs ne soient pas en regard des capteurs dans une des positions d'équilibre du disque.

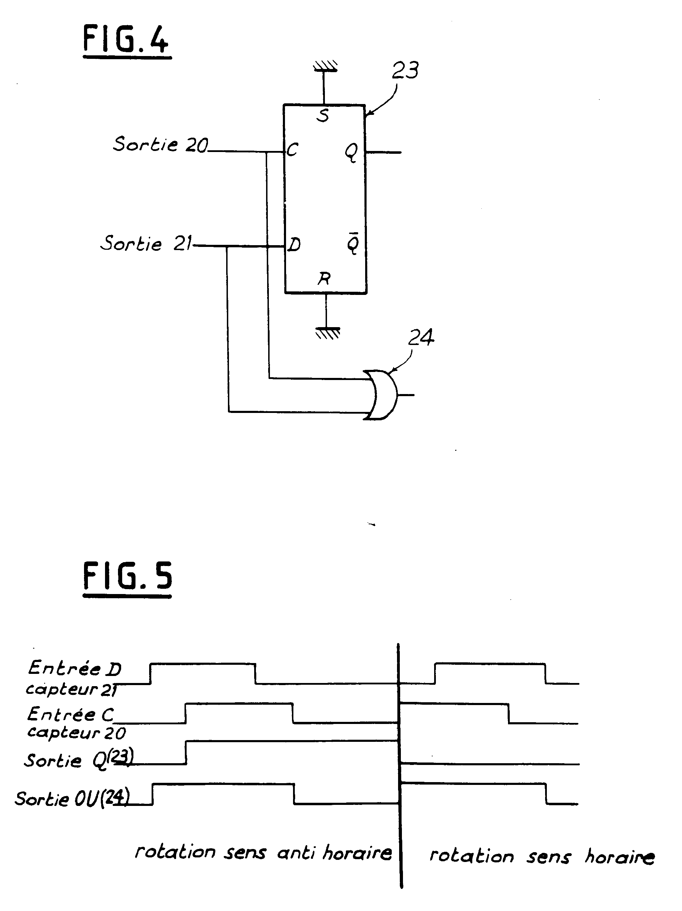

A partir des informations en sortie des capteurs 20 et 21, il est possible grâce au montage représenté sur la Fig.4, de déterminer le sens de rotation du disque. Le fonctionnement de ce dispositif est basé sur une bascule du type D 23 qui recopie l'état de l'entrée D (DATA) sur un front montant de l'entrée C (CLOCK).

La sortie de cette bascule est donc à 0 si le disque tourne dans le sens horaire et à 1 si le disque tourne dans le sens anti-horaire.

En effet, si on applique les signaux résultant de la Fig.3 à cette bascule, ces signaux illustrant le fonctionnement du dispositif dans le cas d'une rotation dans le sens horaire du disque, un secteur 19 polarisé NORD du disque passe d'abord devant le capteur 20 dont la sortie à ce moment passe à l'état 1 en créant ainsi un front montant.

Cependant, ce secteur n'est pas encore passé devant le capteur 21 dont la sortie reste à zéro.

En conséquence, la sortie Q de la bascule reste ou se met à zéro suivant son état antérieur. Ceci permet de déduire le sens de rotation du disque comme cela est représenté sur la Fig.5. L'actionnement du disque est donné par la sortie d'une porte OU 24 (Fig.4) dont les entrées sont reliées à la sortie des capteurs 20 et 21. La sortie de cette bascule 24 est à 1 si le disque est activé et à 0 dans le cas contraire. L'état des sorties des circuits est décrit dans le diagramme de la Fig.5, où les deux sens de rotation sont représentés.

Les signaux ainsi fabriqués permettent à l'unité centrale 1 de déterminer les intentions de l'utilisateur pour en déduire les actions à entreprendre.

Ce mode de réalisation des moyens de réglage ne demande pas de moyens électroniques complexes de traitement et les sorties de la bascule 23 et de la porte OU 24 permettent de connaître à tout moment si la position du disque et donc de la molette a changé et dans quel sens il a tourné, ce qui est nécessaire pour que le système embarqué à bord du véhicule puisse agir en conséquence. Les sorties de cette bascule et de cette porte sont ainsi reliées par exemple à l'unité 1 de traitement qui commande les circuits correspondants. Ce dispositif présente deux avantages qui sont un réglage très facile grâce à l'utilisation de molettes et une sensation tactile grâce à l'effet de crans engendré par l'aimant 22 placé en regard du disque.

L'utilisation des moyens d'affichage multi-fonctions qui viennent d'être décrits est liée à la production de fonctions nouvelles dans les véhicules automobiles, l'un des problèmes importants que se propose de résoudre l'invention étant l'accès aux différentes fonctions à travers les moyens d'affichage.

Il est ainsi possible de raccorder l'unité centrale à un clavier 25 (Fig.1) d'entrée d'informations dans cette unité centrale 1.

Ce clavier peut par exemple être constitué par un clavier alphanumérique simplifié et dans ce cas, les moyens d'affichage peuvent alors présenter la symbolique d'une question à laquelle l'utilisateur répond en tapant des informations sur ce clavier.

Ainsi par exemple, ce système peut être utilisé pour l'entrée des points de départ et d'arrivée dans un système d'aide à la navigation comme celui décrit dans la demande de brevet 88 10 217 aux noms des Demanderesses.

Dans ce système d'aide à la navigation, il est également tout à fait envisageable de passer à un moment donné d'une entrée par le clavier alphanumérique à une recherche dans une liste que l'utilisateur peut faire défiler pour sélectionner l'information pertinente.

Ainsi par exemple, lorsque l'utilisateur doit entrer l'adresse de sa destination, il peut entrer ces informations à l'aide du clavier alphanumérique et indiquer par exemple le nom d'une rue. Cependant, ceci peut conduire à des erreurs par faute de frappe ou par méconnaissance de l'orthographe exacte du nom de cette rue.

Le dispositif selon l'invention peut comporter des moyens d'assistance permettant à l'utilisateur de détecter une éventuelle erreur.

Par ailleurs, il est également possible de remplacer ce clavier d'entrée d'informations par une molette placée à proximité des moyens d'affichage et qui permet à l'utilisateur de faire défiler une ou plusieurs listes de destination ou de points de départ et de sélectionner les informations adéquates.

Ces moyens sont également généralisables à d'autres fonctions, comme par exemple, un répertoire téléphonique ou autre.

Ainsi par exemple, le dispositif qui vient d'être décrit peut être utilisé pour assurer des fonctions de commande d'auto-radio, de climatisation, ou de bureautique en assurant des fonctions de calculatrice, de répertoire téléphonique, d'agenda, ou de prise en note d'informations. Par ailleurs, il peut également être utilisé dans des applications :
- de diagnostic de fonctions du véhicule en prévoyant par exemple un manuel d'utilisateur ou un système de maintenance,
- de navigation,
- d'ordinateur de bord,
- de parcage.

## Revendications

1. Dispositif de commande de fonctions à bord d'un véhicule automobile, caractérisé en ce qu'il comporte des moyens (2) de stockage de pages écrans présentant des zones portant des informations relatives à des fonctions déterminées du véhicule, des moyens (6,7) de sélection d'une page écran, des moyens (4) d'affichage de ladite page écran sélectionnée, dont des zones (8,9, 10,11) correspondant aux zones de la page écran, sont associées chacune à des moyens (12,13,14,15) de réglage d'au moins une caractéristique des fonctions correspondant aux informations affichées dans ces zones, et en ce que les moyens de réglage associés à chaque zone comprennent un seul organe de réglage rotatif dont le raccordement à des circuits (16,17) de commande des fonctions est assuré par des moyens (1) de connexion en fonction des informations affichées dans cette zone, disposé en regard de celle-ci, et muni d'un disque (18) dont des secteurs (19) sont polarisés magnétiquement et déplaçables par l'utilisateur devant des capteurs à effet Hall (20,21) dont les sorties sont reliées à des moyens de traitement (23) pour déterminer le sens de rotation du disque afin de commander les fonctions en conséquence, un aimant (22) de polarité opposée à celle des secteurs du disque (18) étant disposé en regard de celui-ci de manière à donner à l'utilisateur une sensation de franchissement de crans lors de la rotation du disque.

2. Dispositif selon la revendication 1, caractérisé en ce que les informations relatives à des fonctions déterminées du véhicule sont constituées par des pictogrammes.

3. Dispositif selon l'une quelconque des revendications précédentes, caractérisé en ce qu'il comporte un clavier d'entrée d'informations (25).

4. Dispositif selon la revendication 1, caractérisé en ce que les moyens de connexion comprennent une unité centrale de traitement d'informations (1) reliée aux moyens d'affichage (4), aux moyens (5) de sélection de pages écrans, aux moyens de réglage (12,13,14,15), aux moyens de stockage (2) et aux circuits de commande des fonctions (16,17) pour assurer le réglage de celles-ci en fonction des ordres délivrés par l'utilisateur.

5. Dispositif selon les revendications 1 et 4, caractérisé en ce que les moyens de traitement (23) des signaux de sortie des capteurs à effet Hall (20,21) sont reliés à l'unité centrale pour la commande desdites fonctions.

## Patentansprüche

1. Steuervorrichtung für Funktionen an Bord eines Kraftfahrzeugs, dadurch gekennzeichnet, daß sie aufweist: eine Einrichtung (2) zum Speichern von Bildschirmseiten, die Bereiche darstellen, welche Informationen bezüglich bestimmter Funktionen des Fahrzeugs enthalten, eine Einrichtung (6, 7) zum Wählen einer Bildschirmseite, eine Einrichtung (4) zum Anzeigen der gewählten Bildschirmseite, deren den Bereichen der Bildschirmseite entsprechende Bereiche (8, 9, 10, 11) jeweils mit einer Einrichtung (12, 13, 14, 15) zum Einstellen wenigstens einer Charakteristik der Funktionen entsprechend den in den Bereichen angezeigten Informationen zugeordnet sind, und daß die jedem Bereich zugeordneten Stelleinrichtungen ein einzelnes drehbares Stellorgan aufweisen, dessen Verbindung mit Funktionssteuerschaltungen (16, 17) durch eine Verbindungseinrichtung (1) in Abhängigkeit von den in diesem Bereich angezeigten Informationen hergestellt wird und das dieser gegenüberliegend angeordnet und mit einer Scheibe (18) versehen ist, deren Sektoren (19) magnetisch polarisiert und von dem Bediener vor Hall-Effektsensoren (20, 21) verschiebbar sind, deren Ausgänge mit einer Verarbeitungseinrichtung (23) zum Bestimmen der Drehrichtung der Scheibe verbunden sind, um die Funktionen entsprechend zu steuern, wobei ein Magnet (22) mit zu derjenigen der Sektoren der Scheibe (18) entgegengesetzter Polarität dieser gegenüberliegend derart angeordnet ist, daß dem Bediener beim Drehen der Scheibe das Gefühl des Überwindens einer Rastung vermittelt wird.

2. Vorrichtung nach Anspruch 1, dadurch gekennzeichnet, daß die Informationen bezüglich der bestimmten Funktionen des Fahrzeugs durch Piktogramme gebildet sind.

3. Vorrichtung nach einem der vorhergehenden Ansprüche, dadurch gekennzeichnet, daß sie eine Informationseingabetastatur (25) aufweist.

4. Vorrichtung nach Anspruch 1, dadurch gekennzeichnet, daß die Verbindungseinrichtung eine zentrale Datenverarbeitungseinheit (1) aufweist, die mit der Anzeigeeinrichtung (4), der Einrichtung (5) zum Wählen von Bildschirmseiten, den Stelleinrichtungen (12, 13, 14, 15), der Speichereinrichtung (2) und den Funktionssteuerschaltungen (16, 17) verbunden ist, um das Einstellen derselben in Abhängigkeit von den Befehlen des Bedieners zu bewirken.

5. Vorrichtung nach den Ansprüchen 1 bis 4, dadurch gekennzeichnet, daß die Einrichtung (23) zum Verarbeiten der Ausgangssignale der Hall-Effektsensoren (20, 21) zur Steuerung der genannten Funktionen mit der Zentraleinheit verbunden ist.

## Claims

1. Device for controlling the on board functions of a car, characterized in that it comprises means (2) for storing screen pages having zones carrying informations relative to given functions of the vehicle, screen page selection means (6,7), means (4) for the display of the selected screen page, whose zones (8,9,10,11) corresponding to the zones of the screen page, are in each case associated with means (12,13,14,15) for regulating at least one characteristic of the functions corresponding to the informations displayed in the zones and in that the regulating means associated with each zone comprise a single, rotary regulating member, whose connection to function control circuits (16, 17) is ensured by connection means (1) as a function of informations displayed in said zone, positioned in front of the same and provided with a disk (18), whose sectors (19) are magnetically polarized and displaceable by the user in front of Hall effect sensors (20,21), whose outputs are connected to processing means (23) in order to determine the rotation direction of the disk in order to control the functions as a consequence thereof, a magnet (22) having an opposite polarity to that of the sectors of the disk (18) being positioned in front of the latter so as to give the user a sensation of passing over notches during the rotation of the disk.

2. Device according to claim 1, characterized in that the informations relative to given functions of the vehicle are constituted by pictograms.

3. Device according to either of the preceding claims, characterized in that it has an information entering keyboard (25).

4. Device according to claim 1, characterized in that the connection means comprise a central information processing unit (1) connected to the display means (4), to the screen page selection means (5), to the regulating means (12,13,14,15), to the storage means (2) and to the function control circuits (16,17) in order to ensure the regulating or control thereof as a function of instructions given by the user.

5. Device according to claims 1 and 4, characterized in that the means (23) for processing output signals from the Hall effect sensors (20,21) are connected to the central processing unit for the control of said functions.
